# EUROPÄISCHE PATENTSCHRIFT

(11) **EP 0 715 118 B1**
(45) Veröffentlichungstag und Bekanntmachung des Hinweises auf die Patenterteilung: **08.12.1999**
(21) Anmeldenummer: 95114010.2
(22) Anmeldetag: 07.09.1995
(51) Int. Cl.: F16N 7/38, F16N 13/16

(54) **Einrichtung zur Rückführung von verbrauchten Schmierstoffen**
Recirculation system for used lubricants
Système de recirculation pour des lubrifiants utilisés

(30) Priorität: 28.11.1994 DE 4442188
(43) Veröffentlichungstag der Anmeldung: 05.06.1996
(73) Patentinhaber: Lincoln GmbH, D-69190 Walldorf (DE)
(72) Erfinder: Burghard, Arndt, D-41352 Korschenbroich (DE)
(74) Vertreter: KEIL & SCHAAFHAUSEN

(56) Entgegenhaltungen:
- EP-A- 0 590 215
- EP-A- 0 614 038
- DE-A- 3 430 040
- US-A- 2 260 497
- US-A- 5 285 871

## Beschreibung

Die Erfindung bezieht sich auf eine Einrichtung zur Rückführung von verbrauchten Schmierstoffen von Verbrauchern, insbesondere von verbrauchten Schmierfetten von den z.B. von einer Schmierstoffversorgungsanlage, wie einer Zentralschmieranlage, versorgten Lagern, zu einer Sammelstelle, z. B. einem Sammelbehälter, über eine Rückführungsleitung von einem Schmierstoffauslaß des jeweiligen Verbrauchers zu der Sammelstelle der Schmierstoffversorgungsanlage.

Aus der EP-A-0 614 038 ist eine Einrichtung zu Rückführung von verbrauchtem von einem Ölnebelgenerator den Verbrauchern zugeführten Schmieröl bekannt, bei welcher das Schmieröl über eine Rückführungsleitung in einen Behälter abfließt, von welchem aus es mit Hilfe einer Handpumpe einer Rückflußleitung zugeführt werden kann. Dieses Schmiermittelsystem eignet sich nicht für die Verarbeitung von hochviskosen Schmierstoffen, wie Schmierfetten.

In bekannten Zentralschmieranlagen wird Lagern in bestimmten Zeitintervallen neues Schmierfett zugeführt. Das verbrauchte Schmierfett wird dabei aus den Lagern in die Umgebung herausgedrückt, wodurch die Umwelt in unerwünschter Weise belastet wird. Ähnliche Nachteile bestehen bei anderen Schmierstoffversorgungsanlagen.

Aufgabe der vorliegenden Erfindung ist es, diesem Nachteil auf einfache und zuverlässige Weise abzuhelfen.

Diese Aufgabe wird bei einer Schmierstoffrückführungseinrichtung mit den Merkmalen des Anspruchs 1 gelöst. Hierdurch wird zuverlässig über die gesamte Betriebsdauer der Schmierstoffversorgungsanlage eine Rückführung des verbrauchten Schmierstoffes gewährleistet, auch wenn es sich um hochviskoses Schmierfett handelt. Dadurch, daß dem Verbraucher in der Rückführungsleitung ein Pumpenelement unmittelbar nachgeordnet ist, kann zusätzlich verhindert werden, daß der Fettdruck in einem Lager übermäßig ansteigt, was zu einer Lagererhitzung führen kann.

Um dieses Ziel sicher zu erreichen, wird mit der Erfindung ferner vorgeschlagen, daß der Verbraucher, abgesehen von seinem Schmierstoffeinlaß und dem Schmierstoffauslaß, gegen Schmierstoffdurchtritt abgedichtet ist.

Um weiterhin zu gewährleisten, daß der aus dem Verbraucher abgeführte verbrauchte Schmierstoff sicher zur Sammelstelle gefördert wird, sind vor und nach dem Pumpenelement Rückschlagventile in der Rückführungsleitung vorgesehen.

Das Pumpenelement besteht vorzugsweise aus einem Pumpenkörper mit einem in einer Pumpenkammer derart axial beweglichen Kolben, daß Überschußschmierstoff bei einer Rückwärtsbewegung des Kolbens von dem Schmierstoffauslaß des Verbrauchers über einen Pumpeneinlaß in die Pumpenkammer eingesaugt und bei einer Vorwärtsbewegung des Kolbens über einen Pumpenauslaß in die Rückführungsleitung in Richtung der Sammelstelle herausgedrückt wird. Dies kann z. B. im Zusammenwirken mit je einem vor und nach dem Pumpenelement in der Rückführungsleitung angeordneten Rückschlagventil sichergestellt werden.

Mit besonderem Vorteil wird der Kolben, vorzugsweise gegen die Wirkung einer Rückstellfeder, von dem Pumpendruck aus der Hauptleitung der Schmierstoffversorgungsanlage, vorzugsweise der Zentralschmieranlage selbst, angetrieben. Jedesmal, wenn der Druck in der Hauptleitung abfällt, bewegt sich der Kolben in Gegenrichtung selbsttätig mit Hilfe der Rückstellfeder.

Insbesondere in dem letztgenannten Fall ist es zweckmäßig, wenn der Förderhub des Kolbens mittels als Anschlag wirkender Regulierschraube einstellbar ist, um die Schmierstofffördermenge bei jedem Kolbenhub an die Gegebenheiten anzupassen.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung auch unabhängig von ihrer Zusammenfassung in den Ansprüchen oder deren Rückbeziehung.

Es zeigen:
- Fig. 1: die schematische Darstellung einer die Erfindung aufweisenden Zentralschmieranlage mit Fettrückführung und
- Fig. 2: ein Pumpenelement schematisch im Schnitt.

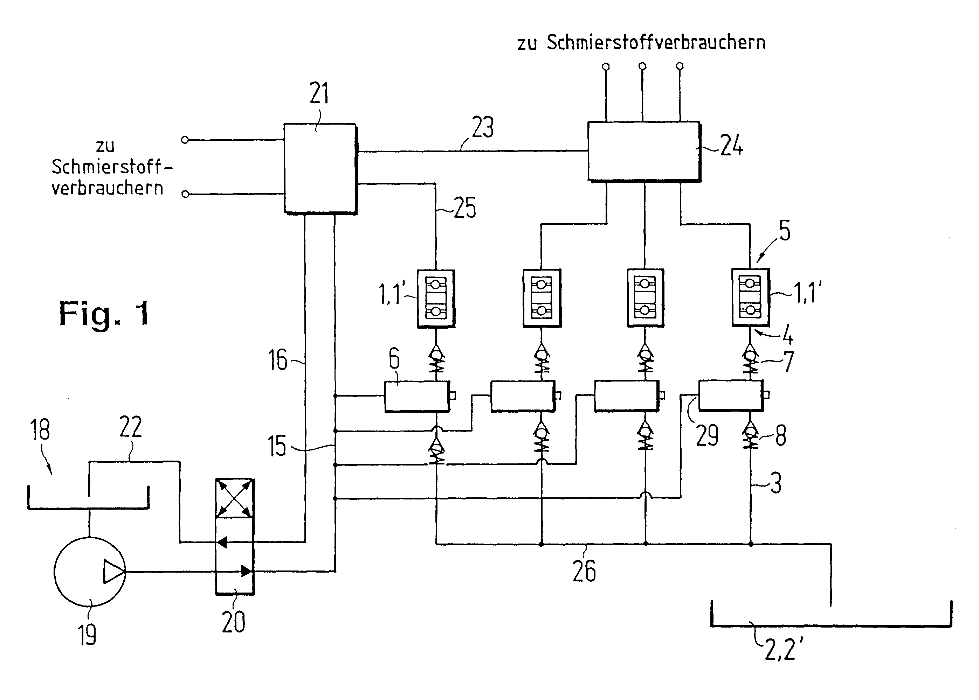

Die Erfindung wird nachfolgend beispielhaft anhand der in Fig. 1 veranschaulichten Zentralschmieranlage mit Fettrückführung erläutert. Dies bedeutet jedoch keine Beschränkung der Erfindung auf diesen Anwendungsfall.

Bei der dargestellten Zweileitungs-Zentralschmieranlage mit nachgeschaltetem Progressivverteiler 24 wird das aus einem Vorratsbehälter 18 entnommene Fett mittels einer Schmierpumpe 19 über eine Umsteuerung 20 einer Hauptleitung 15 zugeführt. Die Hauptleitung 15 führt zu einem Zweileitungsverteiler 21, welcher über eine zweite Hauptleitung 16 und die Umsteuerung 20 mit einem in den Vorratsbehälter 18 zurückführenden Leitungsabschnitt 22 in Strömungsverbindung steht. Von dem Zweileitungsverteiler 21 führt eine Leitung 23 zu einem Progressivverteiler 24 und eine weitere Leitung 25 unmittelbar zu einem Lager 1'. Die übrigen drei dargestellten Lager 1' werden von dem Progressivverteiler 24 aus versorgt. Das Schmierfett gelangt jeweils über einen Schmierstoffeinlaß 5 in das Lager 1', welches außerdem mit einem Schmierstoffauslaß 4 versehen ist. Im übrigen ist das Lager 1' gegen Fettaustritt abgedichtet.

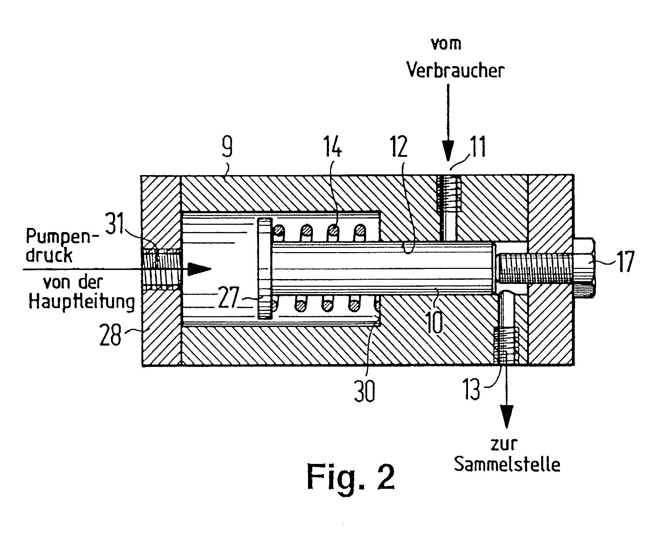

An den jeweiligen Schmierstoffauslaß 4 des Lagers 1' ist eine Rückführungsleitung 3 angeschlossen. In die Rückführungsleitung 3 ist jeweils ein Pumpenelement 6, z. B. ein Pumpenelement gemäß Fig. 2, eingeschaltet. Jeweils vor und hinter dem Pumpenelement befindet sich ein Rückschlagventil 7, 8. Die einzelnen Rückführungsleitungen 3 sind zu einer Sammelleitung 26 zusammengefaßt, welche in einen Sammelbehälter 2' mündet.

Das Pumpenelement 6 hat gemäß Fig. 2 einen hohlzylindrischen Pumpenkörper 9, in welchem ein Kolben 10 axial hin- und herbewegbar aufgenommen ist. Das vordere Ende des Kolbens 10 ist in einem Abschnitt der Pumpenkammer 12 geführt, in welche ein Pumpeneinlaß 11 von dem jeweiligen Lager 1' mündet und von welcher ein Pumpenauslaß 13 in Richtung zur Sammelstelle 2 wegführt. Das hintere Ende des Kolbens 10 stützt sich mittels eines erweiterten Kopfabschnittes 27 über eine Rückstellfeder 14 an eine Schulter 30 der Wandung des Pumpenkörpers 9 ab. Der Hub des Kolbens 10 kann mittels einer Regulierschraube 17, welche stirnseitig in dem Pumpengehäuse 9 angeordnet ist, eingestellt werden. In der der Regulierschraube 17 gegenüberliegenden Stirnwandung 28 des Pumpengehäuses 9 befindet sich ein Fetteinlaß 31 für den Anschluß an die Hauptleitung 15, um für den Antrieb des Kolbens 10 gegen die Wirkung der Rückstellfeder 14 zu sorgen.

Die Funktionsweise der Zentralschmieranlage nach Fig. 1 ist folgende:

Verbrauchtes Schmierfett gelangt von den Lagern 1' nicht in die Umgebung, sondern wird ausschließlich von den Rückführungsleitungen 3 übernommen. Mit Hilfe der in die Rückführungsleitungen 3 eingeschalteten und von der Hauptleitung 15 aus selbsttätig betriebenen Pumpenelemente 6 wird in Zusammenwirken mit den beiden Rückschlagventilen 7 und 8 das verbrauchte Schmierfett über die Rückführungsleitungen 3 zu der Sammelleitung 26 und von dort in den Sammelbehälter 2' gefördert. Damit wird ein wesentlicher Beitrag zur Umweltentlastung geleistet.

### Bezugszeichenliste:

- 1: Verbraucher
- 1': Lager
- 2: Sammelstelle
- 2': Sammelbehälter
- 3: Rückführungsleitung
- 4: Schmierstoffauslaß des Verbrauchers
- 5: Schmierstoffeinlaß des Verbrauchers
- 6: Pumpenelement
- 7: Rückschlagventil
- 8: Rückschlagventil
- 9: Pumpenkörper
- 10: Kolben
- 11: Pumpeneinlaß
- 12: Pumpenkammer
- 13: Pumpenauslaß
- 14: Rückstellfeder
- 15: Hauptleitung A
- 16: Hauptleitung B
- 17: Regulierschraube
- 18: Vorratsbehälter
- 19: Schmierpumpe
- 20: Umsteuerung
- 21: Zweileitungsverteiler
- 22: Leitungsabschnitt
- 23: Leitung
- 24: Progressivverteiler
- 25: weitere Leitungen
- 26: Sammelleitung
- 27: Kopfabschnitt
- 28: Stirnwandung
- 29: Fetteinlaß
- 30: Schulter
- 31: Fetteinlaß

## Patentansprüche

1. Einrichtung zur Rückführung von verbrauchten Schmier stoffen von Verbrauchern (1) zu einer Sammelstelle (2) über eine Rückführungsleitung (3) von einem Schmierstoffauslaß (4) des jeweiligen Verbrauchers (1) zu der Sammelstelle (2) einer Schmierstoffversorgunganlage, **dadurch gekennzeichnet**, daß dem Verbraucher (1) in der Rückführungsleitung (3) ein Pumpenelement (6) derart unmittelbar nachgeordnet ist, daß bei Betätigung des Pumpenelements (6) Überschußschmierstoff über einen Pumpeneinlaß (11) von dem Verbraucher (1) abgesaugt und anschließend über einen Pumpenauslaß (13) in die Rückführungsleitung (3) in Richtung der Sammelstelle (2) herausgedrückt wird.

2. Einrichtung nach Anspruch 1, **dadurch gekennzeichnet**, daß der Verbraucher (1), abgesehen von seinem Schmierstoffeinlaß (5) und dem Schmierstoffauslaß (4), gegen Schmierstoffdurchtritt abgedichtet ist.

3. Einrichtung nach Anspruch 1 oder 2, **dadurch gekennzeichnet**, daß vor und nach dem Pumpenelement (6) Rückschlagventile (7, 8) in der Rückführungsleitung (3) vorgesehen sind.

4. Einrichtung nach einem der Ansprüche 1 bis 3, **dadurch gekennzeichnet**, daß das Pumpenelement (6) einen Pumpenkörper (9) mit einem in einer Pumpenkammer (12) derart axial beweglichen Kolben (10) aufweist, daß Überschußschmierstoff bei einer Rückwärtsbewegung des Kolbens (10) von dem Schmierstoffauslaß (4) des Verbrauchers (1) in die Pumpenkammer (12) eingesaugt und bei einer Vorwärtsbewegung des Kolbens (10) in die Rückführungsleitung (3) herausgedrückt wird.

5. Einrichtung nach Anspruch 4, **dadurch gekennzeichnet**, daß der Kolben (10), vorzugsweise gegen die Wirkung einer Rückstellfeder (14), pneumatisch oder hydraulisch, von dem Pumpendruck aus der Hauptleitung (15) der Schmierstoffversorgungsanlage antreibbar ist.

6. Einrichtung nach Anspruch 4 oder 5, **dadurch gekennzeichnet**, daß der Förderhub des Kolbens (10) mittels als Anschlag wirkender Regulierschraube (17) einstellbar ist.

## Claims

1. Device for returning used lubricants of consumers (1) to a collection point (2) via a return duct (3) from a lubricant outlet (4) of the respective consumer (1) to the collection point (2) of a lubricant supply system, characterized in that in the return duct (3) the consumer (1) is directly followed by a pump element (6) so that when actuating the pump element (6) excess lubricant is extracted via a pump inlet (11) from the consumer (1) and subsequently pressed out via a pump inlet (13) into the return duct (3) in the direction of the collection point (2).

2. Device according to claim 1, characterized in that the consumer is sealed against lubricant leakage except for its lubricant inlet (5) and the lubricant outlet (4).

3. Device according to claim 1 or 2, characterized in that check valves are provided in the return duct (3) before and after the pump element (6).

4. Device according to one of claims 1 to 3, characterized in that the pump element (6) comprises a pump body (9) including a piston being axially movable within a pump chamber (12) so that at a backward motion of the piston excess lubricant is extracted from the lubricant outlet (4) of the consumer (1) into the pump chamber (12) and at a forward motion of the piston (10) pressed out into the return duct (3).

5. Device according to claim 4, characterized in that the piston (10) is pneumatically or hydraulically actuatable preferably against the effect of a return spring (14) by the pump pressure from the main duct (15) of the lubricant supply system.

6. Device according to claim 4 or 5, characterized in that the delivery stroke of the piston (10) is adjustable by means of a regulating screw (17) having the effect of a stop.

## Revendications

1. Système de recyclage de lubrifiants usagés depuis des utilisateurs (1) vers un poste collecteur (2), par l'intermédiaire d'une conduite de recyclage (3) menant d'une sortie de lubrifiant (4) de l'utilisateur respectif (1) au poste collecteur (2) d'une installation d'alimentation en lubrifiant, **caractérisé** en ce qu'un élément de pompage (6) est disposé à la suite immédiate de l'utilisateur (1) dans la conduite de recyclage (3), de telle sorte qu'en actionnant l'élément de pompage (6), le lubrifiant excédentaire est évacué par aspiration de l'utilisateur (1) par l'intermédiaire d'une entrée de pompe (11), puis refoulé dans la conduite de recyclage (3) en direction du poste collecteur (2) par l'intermédiaire d'une sortie de pompe (13).

2. Système selon la revendication 1, **caractérisé** en ce que l'utilisateur (1), abstraction faite de son entrée de lubrifiant (5) et de la sortie de lubrifiant (4), est hermétiquement fermé au passage de lubrifiant.

3. Système selon la revendication 1 ou 2, **caractérisé** en ce que des clapets antiretour (7, 8) sont prévus avant et après l'élément de pompage (6) dans la conduite de recyclage (3).

4. Système selon une des revendications 1 à 3, **caractérisé** en ce que l'élément de pompage (6) présente un corps de pompe (9) avec un piston (10) mobile axialement dans une chambre de pompe (12) de telle sorte que le lubrifiant excédentaire est aspiré de la sortie de lubrifiant (4) de l'utilisateur (1) dans la chambre de pompe (12) lors d'un mouvement en arrière du piston (10), et refoulé dans la conduite de recyclage (3) lors d'un mouvement en avant du piston (10).

5. Système selon la revendication 4, **caractérisé** en ce que le piston (10) peut être entraîné pneumatiquement ou hydrauliquement par la pression de pompage provenant de la conduite principale (15) de l'installation d'alimentation en lubrifiant, de préférence contre l'action d'un ressort de rappel (14).

6. Système selon la revendication 4 ou 5, **caractérisé** en ce que la course de refoulement du piston (10) peut être réglée au moyen d'une vis de régulation (17) jouant le rôle de butée.
